# EUROPÄISCHE PATENTANMELDUNG

(11) **EP 1 239 213 A1**
(43) Veröffentlichungstag der Anmeldung: **11.09.2002**
(21) Anmeldenummer: 02004872.4
(22) Anmeldetag: 04.03.2002
(51) Int. Cl.: F17C 5/00, B60R 21/26, F15B 3/00

(54) **Energiespeicher für hydraulische Anlagen**

(30) Priorität: 08.03.2001 DE 10111233
(71) Anmelder: STILL GMBH, D-22113 Hamburg (DE)
(72) Erfinder: Neuf, Ottmar, 21465 Reinbek (DE); Bavendiek, Rainer, Dr., 21465 Wentorf (DE); Macit, Recep, 40625 Düsseldorf (DE)
(74) Vertreter: Lang, Michael (DE)

(57) **Zusammenfassung**

Die Erfindung betrifft eine Vorrichtung und ein Verfahren zur Bereitstellung von Energie für hydraulische Anlagen. Die Vorrichtung ist durch mindestens eine Gaserzeugungspatrone (2) sowie Mittel (5) zur Aktivierung einer Gaserzeugung gekennzeichnet. Dabei sind als Gaserzeugungspatronen (2) Gasdruckbehälter (2) oder mit besonderem Vorteil auch pyrotechnische Gaserzeugungspatronen (2) vorgesehen.

Das erfindungsgemäße Verfahren ist dadurch gekennzeichnet, dass bei einem Absinken des Drucks in einem Hydraulikkreis eine Gaserzeugung aktiviert wird.

## Beschreibung

Die Erfindung betrifft eine Vorrichtung und ein Verfahren zur Bereitstellung von Energie für hydraulische Anlagen.

Bekannt ist der Einsatz von Druckspeichern als Energiespeicher für hydraulische Anlagen. Für den Fall, dass eine hydraulische Anlage eine zusätzliche Energiezufuhr benötigt, wird nach dem Stand der Technik Energie aus einem Druckspeicher zur Verfügung gestellt. Dabei wird üblicherweise ein Speicher eingesetzt, der auf einer Seite ein unter Druck stehendes Gaspolster, in der Mitte eine Membran und auf der anderen Seite ein Hydraulikmedium aufweist. Diese Systeme sind aufgrund der wechselnden Druckbelastung der Membran durch das anliegende Hydraulikmedium nur sehr begrenzt haltbar. Aus diesem Grund sind die bekannten Systeme wartungsintensiv und teuer.

Der Erfindung liegt daher die Aufgabe zugrunde, einen Energiespeicher zur Verfügung zu stellen, der auf einfache und kostengünstige Weise eine Energiezufuhr an eine hydraulische Anlage im Bedarfsfall ermöglicht.

Diese Aufgabe wird vorrichtungsseitig dadurch gelöst, dass mindestens eine Gaserzeugungspatrone sowie Mittel zur Aktivierung einer Gaserzeugung vorgesehen sind. Dadurch steht mit besonderem Vorteil im Bedarfsfall Energie für eine hydraulische Anlage zur Verfügung. Auf Seiten der Gaserzeugungspatrone wird erst bei Bedarf für eine Energiezufuhr an die hydraulische Anlage Druck aufgebaut, der dann auf das Hydraulikmedium übertragbar ist.

Zweckmäßigerweise ist eine mit einem Inertgas gefüllte Gaserzeugungspatrone vorgesehen. Dadurch wird sichergestellt, dass das den Druck erzeugende Gas nicht mit dem Hydraulikmedium reagiert.

Nach einer weiteren Ausgestaltung der Erfindung ist eine Membran vorgesehen, die zwischen der Gaserzeugungspatrone und einem Hydraulikmedium angeordnet ist. Solange keine Energiezufuhr aus dem Energiespeicher benötigt wird, tritt dabei vorteilhaft keine Belastung der Membran auf, da die Membran bevorzugt an der Wandung eines u.a. das Hydraulikmedium beinhaltenden Behälters anliegt. In diesem Behälter trennt die Membran das Hydraulikmedium von der Gaserzeugungspatrone, die bevorzugt in einer Ausbuchtung oder Aussparung der Behälterwand angebracht ist.

Bevorzugt ist als Gaserzeugungspatrone ein Gasdruckbehälter vorgesehen. Besonders bevorzugt ist ein mit Kohlendioxid gefüllter Gasdruckbehälter vorgesehen. Dabei kommen zweckmäßigerweise handelsübliche Kohlendioxiddruckbehälter zum Einsatz. Das Kohlendioxid weist darüber hinaus den Vorteil auf, ein kostengünstiges Gas zu sein.

Gemäß einer weiteren vorteilhaften Ausgestaltung der Erfindung ist als Gaserzeugungspatrone eine pyrotechnische Patrone vorgesehen. Beispielsweise wird dazu eine pyrotechnische Patrone, wie von Airbag-Systemen in PKWs bekannt, verwendet.

Der Erfindung ist der Vorteil zu eigen, dass die Gaserzeugungspatrone den Raum, in dem sie sich befindet, für eine bestimmte Zeitspanne mit Druck auflädt. Der durch die Membran begrenzte Gasraum erweitert sich, wodurch der Druck an das auf der anderen Seite der Membran befindlich Hydraulikmedium weitergegeben wird, und somit zusätzliche Energie beispielsweise für eine durch die hydraulische Anlage angetriebene Bewegung einer Maschine zur Verfügung steht. Mit besonderem Vorteil kann eine erfindungsgemäße Vorrichtung eine oder mehrere Gaserzeugungspatronen aufweisen. Mehrere Gaserzeugungspatronen kommen insbesondere als redundante Systeme zur Erhöhung der Zuverlässigkeit der Vorrichtung zum Einsatz.

Des Weiteren ist es von Vorteil, dass sich der Druck im Bedarfsfall sehr schnell aufbaut, beispielsweise mit Hilfe einer elektrischen Aktivierung der Gaserzeugung.

Verfahrensseitig wird die gestellte Aufgabe dadurch gelöst, dass bei einem Absinken des Drucks in einem Hydraulikkreis eine Gaserzeugung aktiviert wird. Vorteilhaft wird beim Absinken des Drucks unter einen bestimmten Grenzwert eine Gaserzeugung aktiviert. Dabei ist es zweckmäßig, den Grenzwert vorab festzulegen.

Bevorzugt wird zur Gaserzeugung eine Gaserzeugungspatrone eingesetzt. Besonders bevorzugt wird eine mit Inertgas gefüllte Gaserzeugungspatrone eingesetzt. Dadurch wird sichergestellt, dass das den Druck erzeugende Gas nicht mit dem Hydraulikmedium reagiert.

Alternativ wird zwischen der Gaserzeugungspatrone und einem Hydraulikmedium eine Membran eingesetzt. Diese Membran dient nach Aktivierung der Gaserzeugung als Abtrennung zwischen einem Gasraum und dem Hydraulikmedium, wodurch eine breitere Auswahl an für das Verfahren einsetzbaren Gasen zur Verfügung steht.

Gemäß einer bevorzugten Ausgestaltung der Erfindung wird der Druck im Hydraulikkreis gemessen und die Meßwerte werden an eine Steuerung übermittelt.

Vorteilhafterweise wird für den Fall, dass mindestens ein gemessener Druckwert einen bestimmten Grenzwert unterschreitet, die Gaserzeugung durch die Steuerung aktiviert. Beispielsweise wird die Gaserzeugung elektrisch aktiviert.

Zweckmäßigerweise wird nach Aktivierung der Gaserzeugung Gas aus der Gaserzeugungspatrone in einen Behälter eingebracht. Der Behälter wird vorteilhaft so mit dem Hydraulikkreis verbunden, dass der durch die Gaserzeugung bedingte Druckaufbau im Behälter dem Druckabfall im Hydraulikkreis entgegenwirkt.

Mit besonderem Vorteil können eine oder mehrere Gaserzeugungspatronen eingesetzt werden, insbesondere auch eine Kombination beispielsweise aus einem Gasdruckbehälter und einer pyrotechnischen Patrone.

Die Erfindung weist als Vorteile die Einsparung von wartungsintensiven herkömmlichen Druckspeichem und einen geringeren Platzbedarf im Vergleich zu diesen Druckspeichem auf. Darüber hinaus wird mit besonderem Vorteil eine große Energiemenge im Bedarfsfall sehr schnell und sicher zur Verfügung gestellt.

Ebenso ist es von Vorteil, dass beim Einsatz eines erfindungsgemäßen Energiespeichers kein Druck von Seiten des Energiespeichers an der Membran anliegt solange keine Energie aus dem erfindungsgemäßen Energiespeicher benötigt wird. Somit sind die Bauteile der hydraulischen Anlage einer geringeren Belastung als bei herkömmlichen Systemen ausgesetzt. Des Weiteren wird durch die Erfindung die Sicherheit einer hydraulischen Anlage, zum Beispiel bei Reparatur- und Wartungsarbeiten, erhöht.

Die Erfindung bietet vielfältige Anwendungsmöglichkeiten. Als Beispiele werden der Einsatz bei hydraulischen, pneumatischen und elektro-hydraulischen Systemen, in denen einmalig und kurzfristig eine bestimmte Energiemenge benötigt wird, genannt. Der Einsatz in Flurförderzeugen zur Abfederung von Belastungsspitzen durch Bodenunebenheiten, die auf die transportierte Last wirken, stellt ein weiteres Anwendungsbeispiel der Erfindung dar.

Im folgenden soll die Erfindung anhand von in den Figuren schematisch dargestellten Ausführungsbeispielen näher erläutert werden. Die Figuren zeigen:
- Figur 1: eine erfindungsgemäße Vorrichtung zur Bereitstellung von Energie für eine hydraulische Anlage
- Figur 2: eine erfindungsgemäße Vorrichtung mit Membran zur Bereitstellung von Energie für eine hydraulische Anlage

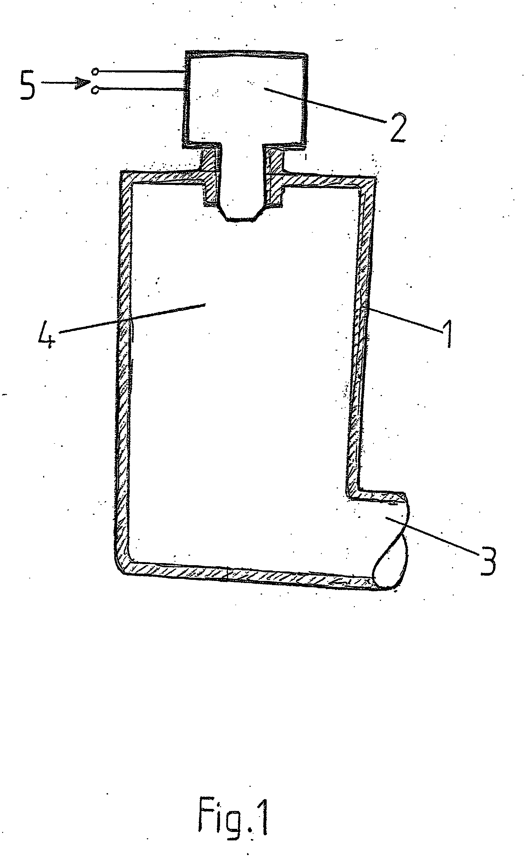

Im einzelnen sind in der Figur 1 ein Gehäuse 1 als Teil einer hydraulische Anlage mit einer Gaserzeugungspatrone 2, sowie einem Verbindungsstutzen 3 gezeigt, über den das Hydraulikmedium mit den anderen Komponenten der hydraulischen Anlage in Verbindung steht. Der Raum 4 enthält Hydraulikmedium. Die Energiebereitstellung erfolgt durch die in der Gaserzeugungspatrone 2 gespeicherte Energie. Im Bedarfsfall wird die Gaserzeugung beispielsweise elektrisch aktiviert. Dazu steht die elektrische Aktivierung 5 zur Verfügung. Nachdem die Gaserzeugungspatrone 2 aktiviert ist wird durch das ausströmende Gas Energie über den sich erhöhenden Druck im Raum 4 auf das Hydraulikmedium übertragen.

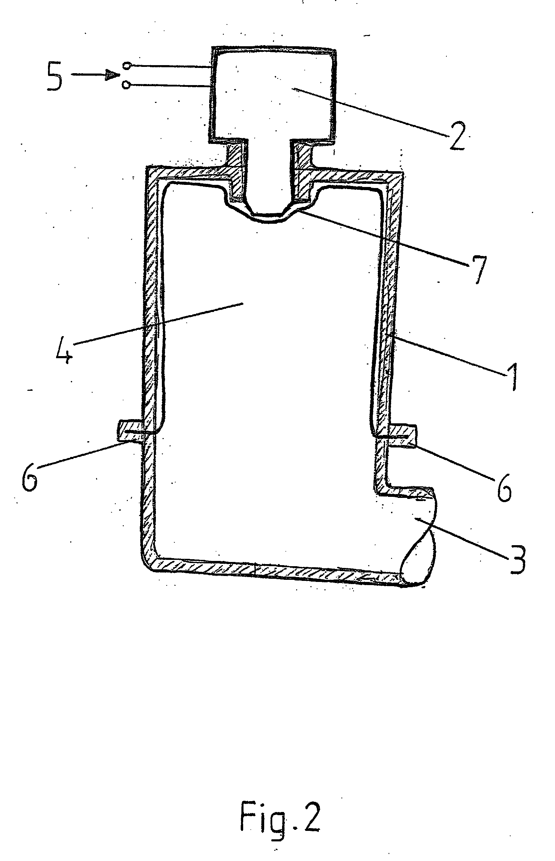

In der Figur 2 sind im einzelnen ein Gehäuse 1 als Teil einer hydraulischen Anlage mit einer Gaserzeugungspatrone 2 und einem Verbindungsstutzen 3, sowie mit einer Membran 5 gezeigt, die den Raum 4 für das Hydraulikmedium von der Gaserzeugungspatrone 2 trennt. Die Membran 5 wird mit Mitteln 6 an dem Gehäuse 1 befestigt. Die Gaserzeugung wird durch eine elektrische Aktivierung 5 ausgelöst. Durch den nach Aktivierung der Gaserzeugung ansteigenden Druck auf Seiten der Gaserzeugungspatrone 2 drückt die Membran 7 auf das in dem Raum 4 enthaltene Hydraulikmedium und überträgt somit Energie an das Hydraulikmedium. Der Einsatz der trennenden Membran 7 weist den Vorteil auf, dass auch Gase, die nicht mit dem Hydraulikmedium in Kontakt kommen dürfen, zur Gaserzeugung verwendet werden können.

Im Bedarfsfall, zum Beispiel bei einem Ausfall einer Komponente der hydraulischen Anlage, der einen Druckverlust nach sich zieht, kann die hydraulische Anlage durch eine Energiezufuhr aus dem erfindungsgemäßen Energiespeicher für eine begrenzte Zeit weiter betrieben werden. Vorteilhaft reicht die gespeicherte Energie aus, um eine Maschine, die eine hydraulische Anlage aufweist, in einem solchen Fall bis zum Erreichen einer sicheren Position, beispielsweise für Reparaturarbeiten, zu betreiben.

## Patentansprüche

1. Vorrichtung zur Bereitstellung von Energie für hydraulische Anlagen, **dadurch gekennzeichnet, dass** mindestens eine Gaserzeugungspatrone (2) sowie Mittel (5) zur Aktivierung einer Gaserzeugung vorgesehen sind.

2. Vorrichtung nach Anspruch 1, **dadurch gekennzeichnet, dass** eine mit einem Inertgas gefüllte Gaserzeugungspatrone (2) vorgesehen ist.

3. Vorrichtung nach Anspruch 1 oder 2, **dadurch gekennzeichnet, dass** eine Membran (7) vorgesehen ist, die zwischen der Gaserzeugungspatrone (2) und einem Hydraulikmedium angeordnet ist.

4. Vorrichtung nach einem der Ansprüche 1 bis 3, **dadurch gekennzeichnet, dass** als Gaserzeugungspatrone (2) ein Gasdruckbehälter (2) vorgesehen ist.

5. Vorrichtung nach Anspruch 4, **dadurch gekennzeichnet, dass** ein mit Kohlendioxid gefüllter Gasdruckbehälter (2) vorgesehen ist.

6. Vorrichtung nach einem der Ansprüche 1 bis 5, **dadurch gekennzeichnet, dass** als Gaserzeugungspatrone (2) eine pyrotechnische Patrone (2) vorgesehen ist.

7. Verfahren zur Bereitstellung von Energie für hydraulische Anlagen, **dadurch gekennzeichnet, dass** bei einem Absinken des Drucks in einem Hydraulikkreis eine Gaserzeugung aktiviert wird.

8. Verfahren nach Anspruch 7, **dadurch gekennzeichnet, dass** zur Gaserzeugung eine Gaserzeugungspatrone (2) eingesetzt wird.

9. Verfahren nach Anspruch 7 oder 8, **dadurch gekennzeichnet, dass** der Druck im Hydraulikkreis gemessen wird und die Meßwerte an eine Steuerung übermittelt werden.

10. Verfahren nach einem der Ansprüche 7 bis 9, **dadurch gekennzeichnet, dass** für den Fall, dass mindestens ein gemessener Druckwert einen bestimmten Grenzwert unterschreitet, die Gaserzeugung durch die Steuerung aktiviert wird.

11. Verfahren nach einem der Ansprüche 7 bis 10, **dadurch gekennzeichnet, dass** nach Aktivierung der Gaserzeugung Gas aus der Gaserzeugungspatrone (2) in einen Behälter eingebracht wird.

12. Verfahren nach Anspruch 11, **dadurch gekennzeichnet, dass** der Behälter so mit dem Hydraulikkreis verbunden wird, dass der durch die Gaserzeugung bedingte Druckaufbau im Behälter dem Druckabfall im Hydraulikkreis entgegenwirkt.
